# EUROPEAN PATENT APPLICATION

(11) **EP 2 823 897 A2**
(43) Date of publication of application: **14.01.2015**
(21) Application number: 14175578.5
(22) Date of filing: 03.07.2014
(51) Int. Cl.: B06B 1/02

(54) **Transducer and subject information acquisition apparatus**

(30) Priority: 10.07.2013 JP 2013144753
(71) Applicant: CANON KABUSHIKI KAISHA, Ohta-ku Tokyo 146-8501 (JP)
(72) Inventor: Takeuchi, Eiji, Ohta-ku, Tokyo (JP); Akiyama, Takahiro, Ohta-ku, Tokyo (JP); Torashima, Kazutoshi, Ohta-ku, Tokyo (JP)
(74) Representative: Derham, Cassandra Virginie

(57) **Abstract**

A transducer includes a plurality of elements each including at least one cell structured in such a way that a diaphragm including one of a first electrode and a second electrode disposed facing each other via a space is vibratably supported, bias wiring for supplying a bias voltage to the first electrode to provide a potential difference between the first and the second electrodes, and for electrically connecting the first electrodes of the elements to each other, and signal wiring lines each connected to a different one of the elements. The bias wiring includes a plurality of branch wiring lines to each of which the first electrodes of a part of the elements are connected, a plurality of first common wiring lines for connecting the branch wiring lines to each other, and a second common wiring line for connecting the first common wiring lines to each other.

## Description

### BACKGROUND OF THE INVENTION

### Field of the Invention

The present invention relates to a transducer and a subject information acquisition apparatus. More particularly, the present invention relates to a transducer for transmitting or receiving an acoustic wave and a subject information acquisition apparatus including the transducer.

### Description of the Related Art

A capacitive micromachined ultrasonic transducer (CMUT) produced by using micro-machining techniques has been studied as a substitute of a piezoelectric element. A capacitance type transducer such as a CMUT can transmit or receive an acoustic wave (typically an ultrasonic wave) by using vibration of a diaphragm.

Each cell of the capacitance type transducer includes two electrodes disposed facing each other to sandwich a space called a cavity which is maintained in a substantially vacuum state. One of the two electrodes is fixed to a membrane, and functions as a diaphragm together with the membrane.

When the capacitance type transducer receives an acoustic wave in a state where a bias voltage is applied between the two electrodes of each cell, the diaphragm of each cell vibrates. Accordingly, the distance between the two electrodes changes, resulting in a change in the capacitance. An element composed of a plurality of cells outputs the change in the capacitance as a current signal. Further, when a voltage with amplitude varying with time (i.e., alternating-current (AC) voltage) is applied between the two electrodes, the diaphragm vibrates, allowing an acoustic wave to be transmitted on an element-by-element basis.

International Publication No. WO 09/008282 discusses a CMUT composed of a plurality of one-dimensionally arranged elements. In the CMUT discussed in International Publication No. WO 09/008282, a bias voltage is applied to lower electrodes (common electrodes) electrically connected to each other among the plurality of elements, and upper electrodes (signal electrodes) separated for each element are connected to the ground. Each electrode is connected to wiring of a flexible substrate with a wire.

It is desirable that each element of the capacitance type transducer has uniform reception characteristics or transmission characteristics (i.e., conversion characteristics such as conversion efficiency). However, in a state where a bias voltage is applied between the electrode (common electrodes) electrically connected to each other among the plurality of elements, and the other electrodes, when the transducer receives an acoustic wave and the diaphragm of each cell vibrates or when an AC voltage is applied between the electrodes, a current flows through the plurality of elements. In this case, a transient response may vary among the elements depending on the condition of wiring connecting the common electrodes to each other. Such a variation occurring in the transient response affects the reception characteristics or transmission characteristics of each element. Particularly in the case of a two-dimensional array composed of two-dimensionally arranged elements, the variation in the transient response may be larger among the elements.

### SUMMARY OF THE INVENTION

The present invention is directed to a transducer which reduces an influence on the conversion characteristics due to a variation in the transient response among the elements.

According to a first aspect of the present invention, there is provided a transducer as specified in claims 1 to 11. According to a second aspect of the present invention, there is provided a subject information acquisition apparatus as specified in claim 12.

Further features of the present invention will become apparent from the following description of exemplary embodiments with reference to the attached drawings.

### BRIEF DESCRIPTION OF THE DRAWINGS

Fig. 1 schematically illustrates a transducer according to an exemplary embodiment of the present invention.
Figs. 2A and 2B schematically illustrate elements according to an exemplary embodiment of the present invention.
Fig. 3 is a circuit diagram illustrating bias wiring according to an exemplary embodiment of the present invention.
Figs. 4A and 4B schematically illustrate bias wiring according to an exemplary embodiment of the present invention.
Figs. 5A and 5B schematically illustrate subject information acquisition apparatuses.

### DESCRIPTION OF THE EMBODIMENTS

Various exemplary embodiments, features, and aspects of the invention will be described in detail below with reference to the drawings.

### (Configuration of transducer)

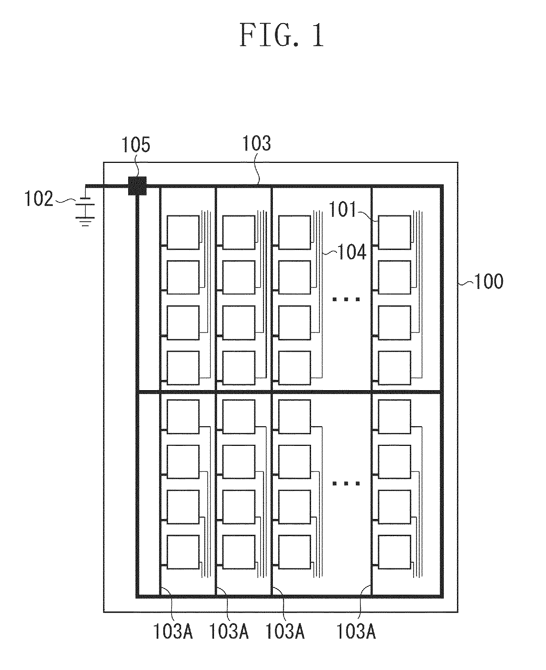

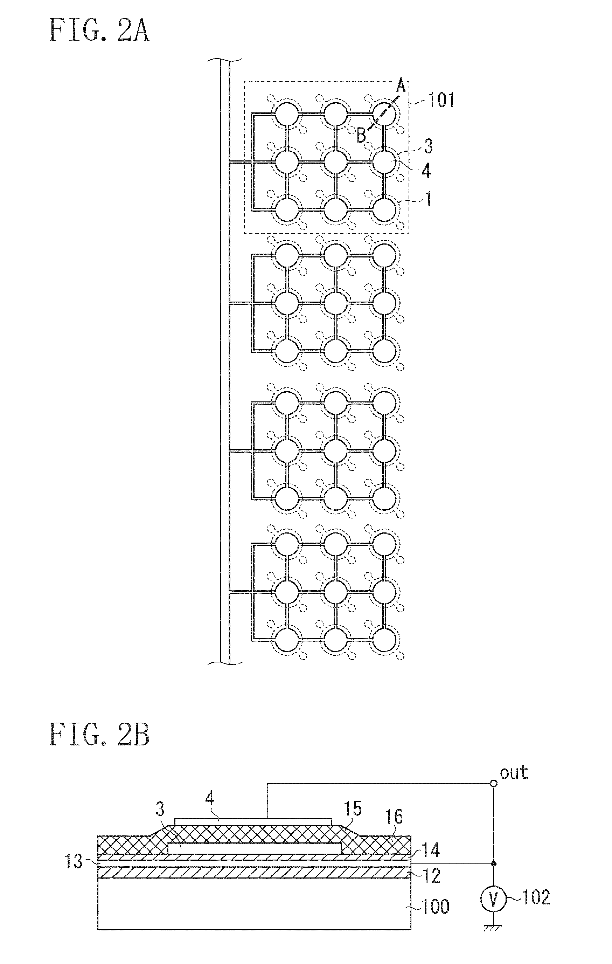

Elements and wiring of a capacitance type transducer according to an exemplary embodiment will be described below with reference to Figs. 1, 2A, and 2B. Fig. 1 is a top view schematically illustrating a capacitance type transducer composed of a plurality of two-dimensionally arranged elements. Fig. 2A is a top view illustrating an arrangement of some of the elements of the transducer. Fig. 2B is a cross-sectional view taken along the A-B line in Fig. 2A.

The transducer according to the present exemplary embodiment includes a substrate 100, a plurality of elements 101 formed on the substrate 100, bias wiring 103, and a signal wiring line 104. The substrate 100 is provided with a terminal 105 to which the bias wiring 103 is connected. The terminal 105 and a wiring substrate (such as a flexible substrate) are connected to each other by a wire, an anisotropic conductive film (ACF), or through wiring to supply a bias voltage to the terminal 105 from a bias power source 102 provided outside the transducer.

The bias wiring 103 according to the present exemplary embodiment is arranged so as to reduce a time constant variation which affects the transient response. This point will be described in detail below.

Fig. 1 illustrates the signal wiring 104 in a simplified way, that is, only illustrates a state where the signal wiring line 104 is pulled out from each of the elements 101. The signal wiring line 104 is routed to signal wiring terminals (not illustrated), and then connected to the wiring substrate by using wires. The signal wiring line 104 may be through wiring penetrating the substrate 100 to be connected to the wiring substrate on the rear surface of the substrate 100.

### (Configuration of elements)

The configuration of the elements 101 according to the present exemplary embodiment will be described below. Each of the elements 101 according to the present exemplary embodiment includes a plurality of cells 1 electrically connected to each other. Although, in Fig. 2A, each of the elements 101 includes nine cells 1, the element 101 may include one cell 1 or any number of cells 1. Although four elements 101 are illustrated in Fig. 2A, any number of elements 101 greater than one may be provided. Although, in Figs. 2A and 2B, the cells 1 have a circular shape, the cells 1 may have a rectangular or hexagonal shape.

Each of the cells 1 is a minimum unit structure in which a diaphragm including one of two electrodes (a pair of electrodes) disposed facing each other via a cavity as a space is vibratably supported. More specifically, in Fig. 2B, each of the cells 1 includes a first electrode 13 and a second electrode 4 disposed facing each other via a space. The first electrode 13 is formed above the substrate 100 via a first insulating film 12. A second insulating film 14 is formed on the first electrode 13. The second electrode 4 functions as a diaphragm together with a membrane 15. The membrane 15 is supported by a membrane supporting member 16, and disposed facing the second insulating film 14 via the cavity 3.

Each of the elements 101 includes at least one cell 1 to form an electrically independent component. Specifically, when one cell 1 is considered as one capacitance, capacitances of the plurality of cells 1 in the element 101 are electrically connected in parallel to each other. Signals are input and output in units of the element 101. Further, when a plurality of elements 101 is provided, the elements 101 are electrically independent of each other.

In the present exemplary embodiment, the first electrodes 13 function as common electrodes electrically connected to each other among the elements 101. A bias voltage is applied to the first electrodes 13. The second electrodes 4 function as signal electrodes from which an output signal for each element 101 is taken out. Specifically, the first electrodes 13 are electrically connected to each other among the elements 101 via the bias wiring 103 illustrated in Fig. 1. The second electrodes 4 are electrically separated for each element 101, and the signal wiring line 104 is not connected to each other among the elements 101.

Although, in the present exemplary embodiment, the first electrodes 13 are electrically connected to each other among the plurality of elements 101 included in the transducer, the first electrodes 13 do not necessarily require electrical connection among all of the elements 101 included in the transducer. Specifically, it is possible that all of the elements 101 are divided into several groups, the first electrodes 13 are electrically connected to each other among a plurality of elements 101 within each of the groups, and the first electrodes 13 are not electrically connected across the groups. For example, it is assumed here that the transducer includes a total of "m" elements 101 (m is an integer equal to or larger than 4), out of which "n" elements 101 (n is an integer equal to or larger than 2, and smaller than m) are included in a first group, and "1" elements 101 (l is an integer equal to or larger than 2, and smaller than m) are included in a second group. In this case, the bias wiring 103 of the first and the second groups may be connected to the same single terminal 105, allowing the first electrodes 13 of the first and the second groups to be connected to each other, or the bias wiring 103 of the first and the second groups may be connected to different terminals 105.

Although, in the present exemplary embodiment, the electrode on the substrate 100 side serves as the first electrode 13 (common electrode) and the electrode on the diaphragm side serves as the second electrode 4 (signal electrode), these electrodes may be configured in reverse way. Specifically, the electrode on the substrate 100 side may serve as a signal electrode separated for each element 101, and the electrode on the diaphragm side may serve as a common electrode conducting among the elements 101.

Although, in Figs. 2A and 2B, the diaphragm is composed of the membrane 15 and the second electrode 4, the diaphragm is only required to include at least the second electrode 4 and to be vibratably configured. For example, the diaphragm may be composed only of the second electrode 4, or the second electrode 4 may be sandwiched by a plurality of membranes 15.

In the present exemplary embodiment, the first electrode 13 is disposed above the substrate 100 via the first insulating film 12, and the second insulating film 14 is disposed on the first electrode 13. However, the first electrode 13 may be disposed directly on the substrate 100 without using the first insulating film 12. Further, the first electrode 13 may be exposed without disposing the second insulating film 14 thereon.

A silicon substrate or a glass substrate can be used as the substrate 100. A metal such as titanium and aluminum, or an aluminum silicon alloy can be used as the first electrode 13, the second electrode 4, the bias wiring line 103, and the signal wiring line 104. A silicon nitride film or a silicon oxide film can be used as the first insulating film 12, the second insulating film 14, and the membrane 15. A transducer can be produced by using well-known methods such as a sacrifice layer type in which a cavity is formed by etching a sacrifice layer, and a junction type in which an active layer (surface silicon layer) of a silicon-on-insulator (SOI) substrate is used as a membrane.

### (Driving principle of transducer)

The driving principle of the capacitance type transducer will be described below. When the capacitance type transducer receives an ultrasonic wave, a potential difference is first produced between the first electrode 13 and the second electrode 4. More specifically, a bias voltage (direct current (DC) voltage) is applied from the bias power source 102 to the first electrode 13, and the second electrode 4 is connected to the ground potential via a receiving circuit (not illustrated). When the transducer receives an ultrasonic wave in this state, the diaphragm having the second electrode 4 vibrates, the distance between the second electrode 4 and the first electrode 13 changes, and accordingly the capacitance changes. This capacitance change causes a signal (current) to be output from the second electrode 4, allowing a current to flow through the signal wiring line 104. This current is converted into a voltage by a current-voltage conversion unit (not illustrated) such as a transimpedance circuit using an operational amplifier included in the receiving circuit (not illustrated), and then transmitted to an external signal processing unit (not illustrated) as a received signal.

When transmitting an ultrasonic wave, an AC voltage is applied from a transmitting circuit (not illustrated) to the second electrode 4 in a state where a potential difference is present between the first electrode 13 and the second electrode 4. A plurality of pulses having a certain number of waves or a sine wave is applied to the second electrode 4 as the AC voltage. The electrostatic force produced by the application of the AC voltage vibrates the diaphragm, enabling ultrasonic wave transmission. The capacitance type transducer according to the present exemplary embodiment is capable of performing at least one of transmission and reception of an ultrasonic wave (acoustic wave).

### (Configuration of bias wiring line)

The configuration of the bias wiring 103 according to the present exemplary embodiment will be described below. First of all, the influence of a variation in the transient response among the elements 101 will be described below.

Among the elements 101 in which the first electrodes 13 (common electrodes) are electrically connected to each other by the bias wiring 103, when the diaphragm of a certain element 101 vibrates, the diaphragm is also influenced by the bias wiring line and the other elements 101 connected to the bias wiring line. For example, when a certain element 101 receives an acoustic wave, the diaphragm of the element 101 vibrates resulting in change in distance between the first electrode 13 and the second electrode 4. To keep the potential difference between the electrodes at the bias voltage even after the distance changes, it is necessary that charges are supplied between the electrodes from the bias power source 102, or absorbed to the bias power source 102. A response time (transient response) from when the charges are supplied (absorbed) until when the potential difference between the electrodes returns to a predetermined bias voltage is influenced by the resistance of the wiring of a charge supply path and the capacitances of the elements 101 connected to the wiring of the charge supply path. Regularly, since a plurality of elements 101 receives an acoustic wave with almost no time difference, some of the elements 101 have a short response time (during which charges vary) and the other elements 101 have a long response time.

When the diaphragms of the plurality of elements 101 vibrate, the elements 101 having a long response time (during which charges vary) are influenced by charge supply to elements 101 having a short response time, resulting in further longer response time. This means that the current transient response of a certain element 101 (temporarily referred to as "first element") is influenced by the current transient responses of the other elements 101 to which the certain element 101 is connected via the bias wiring 103. The above descriptions of the case of acoustic wave reception also apply to the case of acoustic wave transmission. Such a transient response variation among the elements 101 affects the acoustic wave transmission and reception characteristics of the transducer. More specifically, such a transient response variation affects the waveform of a transmitting acoustic wave and the waveform of a signal output from the transducer upon reception of an acoustic wave.

The transient response of the first element depends on the time constant between the bias power source 102 and the first element. Influences on the transient response increase with a larger time constant, and decrease with a lower time constant. A time constant τ is represented by the product of an electrical resistance R and a capacitance C (τ = R x C). Specifically, to reduce the transient response of the first element, it is necessary to decrease the electrical resistance and the capacitance existing between the bias power source 102 and the first element. However, the time constant of the path leading from the bias power source 102 to the terminal 105 on the substrate 100 is considered to be constant for all the elements 101. The above-described potential variation generated by vibration is generated in the elements 101 on the substrate 100. Therefore, when considering the transient response variation among the elements 101, the time constant of a path having the terminal 105 as an input and each of the plurality of elements 101 as an output, has to be considered.

Specifically, the time constant which affects the transient response of a certain element 101 can be approximated by the product of the wiring resistance of the bias supply path from the terminal 105 to the certain element 101 and the capacitances connected to the above-described bias supply path along the above-described bias supply path (total capacitance of the elements 101 other than the certain element 101).

The present exemplary embodiment is characterized by reducing the time constant variation. More specifically, the time constant variation can be reduced by reducing the time constant of the element 101 having a large time constant. To reduce the time constant of a certain element 101 having a large time constant, the following methods can be considered:
1. Reducing the total capacitances of the elements 101 connected to the bias supply path connected to the certain element 101
2. Reducing the wiring resistance of the bias supply path connected to the certain element 101

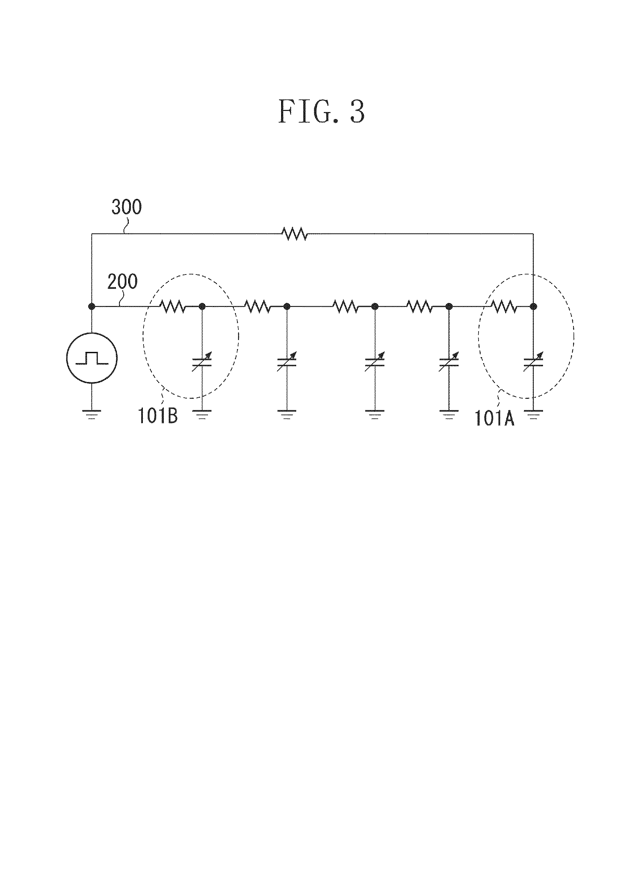

An aspect of the present exemplary embodiment for reducing the time constant variation will be described below with reference to Fig. 3. Fig. 3 illustrates an equivalent circuit in the case of arranging the plurality of elements 101. When a pulse wave is input to the plurality of elements 101, the current phase differs between adjacent elements 101. Therefore, when the number of elements 101 connected to the wiring increases, the waveform of the pulse wave input to each of the elements 101 becomes distorted.

Accordingly, another bias wiring 300 is provided to bypass bias wiring 200 ranging from the transmitting circuit serving as a pulse generation source to the plurality of elements 101. When the bias wiring 300 is connected to an element 101A which is distant from the pulse generation source, the phase of the current output from this element 101A is almost the same as the phase of the current output from an element 101B which is closest to the pulse generation source. By providing the bias wiring 300 having a small capacitive component, the variation in the transient characteristics among the elements 101 can be suppressed, which is equivalent to decreasing the time constant.

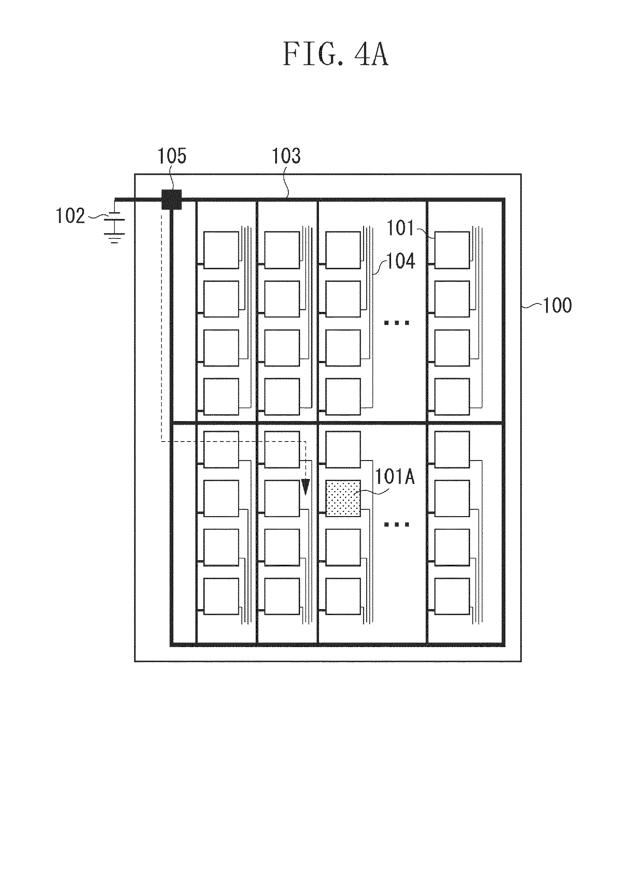

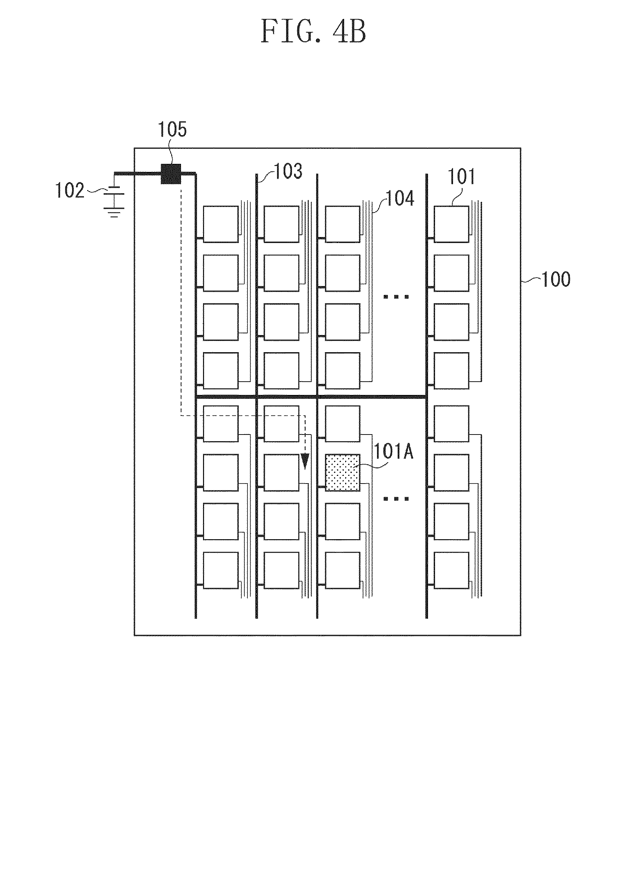

Figs. 4A and 4B illustrate the above-described principle applied to two-dimensional array elements 101. Fig. 4A illustrates the same configuration as that illustrated in Fig. 1. Fig. 4B illustrates a reference example in which a path having a small capacitive component is not provided. Referring to Figs. 4A and 4B, a path for supplying a bias voltage (hereinafter referred to as a bias voltage supply path) from the terminal 105 to an element 101A is denoted by a dotted line.

Referring to Fig. 4B, a pulse wave is input to the element 101A via the bias wiring line to which the plurality of elements 101 is connected. On the other hand, referring to Fig. 4A, a pulse wave is input to the element 101A via a path to which almost no element 101 is connected. Therefore, a phase difference between the current flowing through an element 101 in the vicinity of the terminal 105 and the current flowing through the element 101A is suppressed in the configuration illustrated in Fig. 4A compared to that illustrated in Fig. 4B.

As described above, the present exemplary embodiment is provided with a path having a small time constant to reduce the time constant variation among the elements 101. An aspect of the present exemplary embodiment is characterized in that a plurality of bias wiring lines which functions as first common wiring lines is provided. Referring to Fig. 1, the first common wiring lines refer to three respective bias wiring lines 103 extending in the horizontal direction. The first common wiring lines connect a plurality of bias wiring lines 103A, which extend in the vertical direction, in parallel with each other. A predetermined number of elements 101 (a part of the plurality of elements 101) are connected to each of the bias wiring lines 103A. Hereinafter, the bias wiring lines 103A are referred to as "branch wiring lines 103A".

Further, the present exemplary embodiment is provided with second common wiring lines for connecting the first common wiring lines to each other. Referring to Fig. 1, the second common wiring lines refer to two outer wiring lines extending in the vertical direction with no elements 101 connected thereto.

Thus, by providing the plurality of first common wiring lines for connecting the branch wiring lines 103A to each other, and the second common wiring lines for connecting the first common wiring lines to each other can provide an element 101 distant from the terminal 105 with a bias supply path having a small number of connected elements. Thus, the time constant variation among the elements 101 can be reduced.

It is desirable to provide the bias wiring serving as the first common wiring lines so as to connect the ends of the plurality of branch wiring lines 103A to each other. Referring to Fig. 1, the bias wiring 103 connecting the ends of the plurality of branch wiring lines 103A corresponds to two (top and bottom) first common wiring lines out of the three (top, central, and bottom) first common wiring lines extending in the horizontal direction. Hereinafter, in particular, the top and bottom first common wiring lines connecting the ends of the branch wiring lines 103A are referred to as end common wiring lines. The end common wiring lines can decrease, in particular, the time constant of the elements 101 connected to the branch wiring lines 103A existing in a column distant from the terminal 105, and thereby can reduce the time constant variation among the elements 101.

It is desirable to provide a plurality of second common wiring lines. In particular, as illustrated in Fig. 1, it is desirable to provide at least two second common wiring lines so as to connect the ends of the end common wiring lines to each other. In this case, the outermost circumference of the bias wiring line including the two end common wiring lines and the two second common wiring lines form a closed circuit enclosing the plurality of elements 101 of which the first electrodes 13 are electrically connected to each other. With no elements 101 connected to the outermost circumference of the bias wiring 103, the time constant variation among the elements 101 can further be reduced.

It is also desirable that the first and second common wiring lines provide a smaller electrical resistance (wiring resistance) than the branch wiring lines 103A, and more specifically the first and second common wiring lines are thicker than the branch wiring lines 103A. According to the present exemplary embodiment, referring to the top view as illustrated in Fig. 1, the branch wiring lines 103A extend in parallel with the direction (vertical direction of Fig. 1) in which the plurality of signal wiring lines 104 extends. Since a signal wiring line 104 takes an output from each of the elements 101, a greater number of signal wiring lines 104 for the plurality of elements 101 are arranged at positions closer to the end common wiring lines. Accordingly, the space for the branch wiring lines 103A between the elements 101 (horizontal width) decreases, forcing the wiring width of the branch wiring lines 103A to be reduced.

Naturally, the signal wiring lines 104 and the bias wiring 103 (branch wiring lines 103A) can be arranged so that they vertically overlap each other by providing an insulating film between the signal wiring lines 104 and the branch wiring lines 103A. For example, referring to the sectional view as illustrated in Fig. 2B, it is considered to arrange the signal wiring lines 104 and the bias wiring 103 so that they vertically overlap each other via an insulator such as the membrane supporting member 16. However, in this case, the parasitic capacitance between the wiring lines will increase. Therefore, to provide the branch wiring lines 103A in parallel with the direction in which the signal wiring lines 104 extend without increasing the parasitic capacitance, the wiring width of the branch wiring lines 103A is forced to be reduced.

However, even with the same element interval of the two-dimensional array (when the elements 101 are two-dimensionally arranged equally in the vertical and horizontal directions), it is possible to increase the wiring width of the first common wiring lines. This is because no signal wiring line 104 is provided between the elements 101 in the vertical direction. It is also desirable that the second common wiring lines are provided on the outer side of the branch wiring lines 103A, and are thicker than the branch wiring lines 103A. A state where the branch wiring lines 103A are "in parallel with the direction in which the signal wiring lines 104 extend" includes not only a case where the branch wiring lines 103A are completely in parallel with the signal wiring lines 104 but also a state where the branch wiring lines 103A can be considered to be substantially in parallel with the signal wiring lines 104 to the extent that does not intersect with the signal wiring lines 104.

In the present exemplary embodiment, it is further desirable to form the first common wiring line which intersects with each branch wiring line 103A to halve each branch wiring line 103A. Hereinafter, the first common wiring line that halves each branch wiring line 103A is particularly referred to as a central common wiring line. More specifically, referring to Fig. 1, the central common wiring line is provided so as to halve the space inside the closed circuit formed by the outermost circumference of the bias wiring 103. Thus, providing the central common wiring line can decrease the time constants of the elements 101 provided at the central portion of each branch wiring line 103A, thereby reducing element-to-element variation.

It is desirable to provide the central common wiring line in a position to intersect with the center of each branch wiring line 103A and halve each branch wiring line 103A. To provide the central common wiring line, it is desirable to form a plurality of signal wiring lines 104 so as to extend toward one of the end common wiring lines closer to the respective elements 101 to which the signal wiring lines 104 are connected.

More specifically, referring to Fig. 1, each signal wiring line 104 on the upper side of the vertical center among the plurality of signal wiring lines 104 is formed so as to extend toward the side of the top end common wiring line above the central common wiring line. Further, each signal wiring line 104 on the lower side of the vertical center among the plurality of signal wiring lines 104 is formed so as to extend toward the side of the bottom end common wiring line below the central common wiring line. In this configuration, no signal wiring line 104 is provided at the vertical center, and the central common wiring line preferably does not intersect with any signal wiring line 104.

It is desirable that the signal wiring terminals (not illustrated), to which the signal wiring line 104 pulled out toward the side of the end common wiring line is connected, are provided on the inner side of the end common wiring line (inside the closed circuit). The signal wiring terminals are connected to a wiring substrate such as a flexible wiring substrate by using wires. Alternatively, the signal wiring terminals may be connected to a circuit substrate provided on the rear surface of the substrate 100 via through wiring which penetrates the substrate 100. Further, instead of being formed to be pulled out from the first electrode 13 onto the substrate 100, the signal wiring line 104 itself may be through wiring and pulled out from the bottom portion of the first electrode 13 onto the rear surface of the substrate 100 as through wiring.

On the other hand, according to another aspect of the present exemplary embodiment for reducing the time constant variation among the elements 101, the present exemplary embodiment is characterized in that a plurality of bias voltage supply paths is provided for each of the elements 101. Although, according to the above-described aspect of the present exemplary embodiment, the time constant variation is reduced by providing the plurality of first common wiring lines and the plurality of second common wiring lines, a plurality of bias voltage supply paths may be provided for each of the elements 101 by using a method other than the method with the common wiring lines.

According to yet another aspect of the present exemplary embodiment, as a result of intensive research, the inventor of the present invention has found it desirable that the time constant of each of the elements 101 is 1/10 times or less the reciprocal of the center frequency of the transducer. The reciprocal of the center frequency of the element 101 indicates the period of a signal output from the element 101. Specifically, with a large time constant, the transient response increases, thereby making it impossible to sufficiently reproduce the waveform of the signal output from the element 101 at predetermined intervals.

Therefore, it is desirable that the time constant of each of the elements 101 to which a common electrode is electrically connected is 1/10 times or less the reciprocal of the center frequency f of the transducer (i.e., τ ≤ 1/10f). It is further desirable that the time constant of each of the elements 101 is 1/100 times or less the reciprocal of the center frequency f of the transducer. The center frequency of the transducer is typically 1 MHz or more and 20 MHz or less. However, for a transducer for receiving an acoustic wave generated by a photoacoustic effect (described below), it is desirable that the center frequency is 1 MHz or more and 10 MHz or less.

### (Subject information acquisition apparatus)

The transducer described in the first exemplary embodiment is applicable to a subject information acquisition apparatus using an acoustic wave including an ultrasonic wave. Such a subject information acquisition apparatus is capable of receiving an acoustic wave from a subject by using a transducer, and acquiring, by using an electrical signal output from the transducer, subject information reflecting the optical characteristic values of the subject such as the light absorption coefficient, and subject information reflecting an acoustic impedance difference.

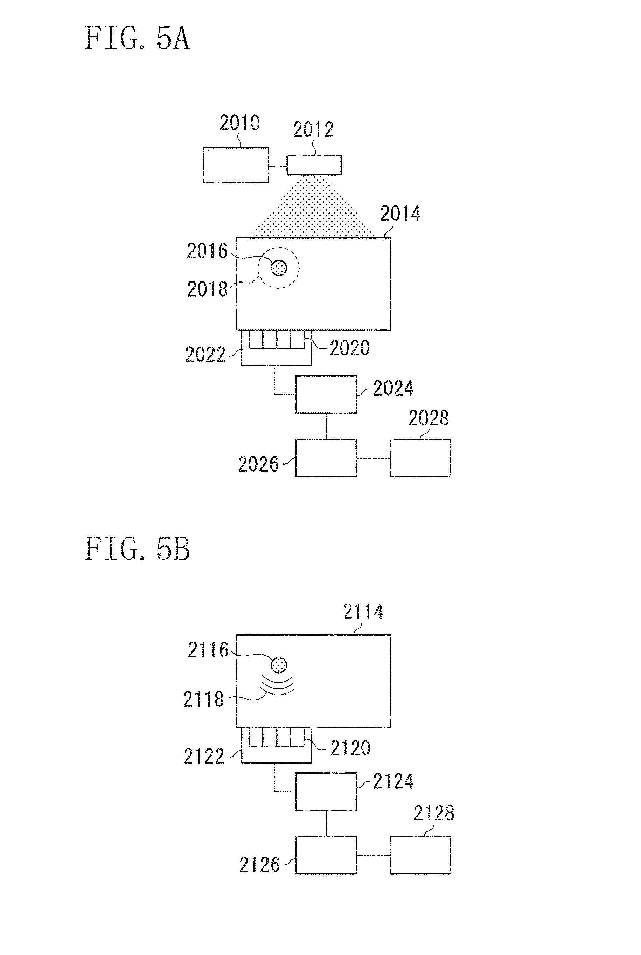

Fig. 5A illustrates a subject information acquisition apparatus using a photoacoustic effect. A subject 2014 is irradiated with a pulsed light generated by a light source 2010 via an optical member 2012 such as a lens, a mirror, and an optical fiber. An optical absorber 2016 included in the subject 2014 absorbs the energy of the pulsed light, and generates a photoacoustic wave 2018 as an acoustic wave. A transducer 2020 included in a probe 2022 receives the photoacoustic wave 2018, converts it into an electrical signal, and outputs the electrical signal to a signal processing unit 2024. The signal processing unit 2024 performs signal processing, such as analog-to-digital (A/D) conversion and amplification, on the input electrical signal, and outputs the processed signal to a data processing unit 2026. By using the input signal, the data processing unit 2026 acquires subject information (characteristic information reflecting the optical characteristic values of the subject, such as the light absorption coefficient) as image data. Herein, the signal processing unit 2024 and the data processing unit 2026 are collectively referred to as a processing unit. A display unit 2028 displays an image based on the image data input from the data processing unit 2026. The bias power source 102 illustrated in Fig. 1 may be included in the subject information acquisition apparatus illustrated in Fig. 5A, or provided separately from the subject information acquisition apparatus.

Fig. 5B illustrates a subject information acquisition apparatus, such as an ultrasonic echo diagnostic apparatus using reflection of an acoustic wave. An acoustic wave transmitted from a transducer 2120 included in a probe 2122 to a subject 2114 is reflected by a reflector 2116. The transducer 2120 receives a reflected acoustic wave 2118, converts it into an electrical signal, and outputs the electrical signal to a signal processing unit 2124. The signal processing unit 2124 performs signal processing, such as A/D conversion and amplification, on the input electrical signal, and outputs the processed signal to a data processing unit 2126. By using the input signal, the data processing unit 2126 acquires subject information (characteristic information reflecting the acoustic impedance difference) as image data. Herein, the signal processing unit 2124 and the data processing unit 2126 are collectively referred to as a processing unit. A display unit 2128 displays an image based on the image data input from the data processing unit 2126. The bias power source 102 illustrated in Fig. 1 may be included in the subject information acquisition apparatus illustrated in Fig. 5B, or provided separately from the subject information acquisition apparatus.

The probes 2022 and 2122 may be a mechanically scanning type or a handheld type which is held and moved on a subject by a user such as a doctor or a technician. In the case of an apparatus using a reflection wave, as illustrated in Fig. 5B, a probe for transmitting an acoustic wave may be provided separately from a probe for receiving an acoustic wave.

Further, it is also possible to combine the functions of the subject information acquisition apparatuses illustrated in Figs. 5A and 5B to acquire both subject information reflecting the optical characteristic values of the subject and subject information reflecting the acoustic impedance difference. In this case, the transducer 2020 illustrated in Fig. 5A not only receives a photoacoustic wave but also transmits an acoustic wave and receives a reflection wave.

According to the exemplary embodiments of the present invention, it is possible to reduce the influence of a variation in the transient response among the elements on the conversion characteristics.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A transducer comprising:
a plurality of elements each including at least one cell structured in such a way that a diaphragm including one of a first electrode and a second electrode disposed facing each other via a space is vibratably supported;
bias wiring for supplying a bias voltage to the first electrode to provide a potential difference between the first and the second electrodes, and for electrically connecting the first electrodes of the plurality of elements to each other; and
a plurality of signal wiring lines each connected to a different one of the plurality of elements,
wherein the bias wiring includes a plurality of branch wiring lines to each of which the first electrodes of a part of the plurality of elements are connected, a plurality of first common wiring lines for connecting the plurality of branch wiring lines to each other, and a second common wiring line for connecting the plurality of the first common wiring lines to each other.

2. The transducer according to claim 1, further comprising a terminal to which the bias wiring is connected,
wherein the bias wiring and the terminal are provided on a substrate on which the plurality of elements is formed.

3. The transducer according to claim 1 or 2, wherein the plurality of first common wiring lines includes an end common wiring line for connecting the ends of the plurality of branch wiring lines to each other.

4. The transducer according to claim 3, wherein an outermost circumference of the bias wiring including a plurality of the end common wiring lines and a plurality of the second common wiring lines forms a closed circuit so as to enclose the plurality of elements.

5. The transducer according to any one of claims 1 to 4, wherein the plurality of first common wiring lines and the second common wiring line have a thicker wiring width than the plurality of branch wiring lines.

6. The transducer according to any one of claims 1 to 5, wherein the plurality of first common wiring lines includes a central common wiring line for connecting the plurality of branch wiring lines to each other at a position where each of the plurality of branch wiring lines is halved.

7. The transducer according to any one of claims 1 to 6, wherein the plurality of first common wiring lines includes an end common wiring line for connecting the ends of the plurality of branch wiring lines to each other, and a central common wiring for connecting the plurality of branch wiring lines to each other at a position where each of the plurality of branch wiring lines is halved, and
wherein the plurality of signal wiring lines is arranged so as to extend from the side of the central common wiring line toward the side of the end common wiring line.

8. A transducer comprising:
a plurality of elements each including at least one cell structured in such a way that a diaphragm including one of a first electrode and a second electrode disposed facing each other via a space is vibratably supported;
bias wiring for supplying a bias voltage to the first electrode to provide a potential difference between the first and the second electrodes, and for electrically connecting the first electrodes of the plurality of elements to each other;
a terminal to which the bias wiring is connected; and
a plurality of signal wiring lines each connected to a different one of the plurality of elements,
wherein, when the terminal is considered as an input and each of the plurality of elements is considered as an output, the time constant of each of the plurality of elements is 1/10 times or less a reciprocal of a center frequency of the transducer.

9. The transducer according to any one of claims 1 to 8, wherein the plurality of elements forms a two-dimensional array.

10. The transducer according to any one of claims 1 to 9, wherein the plurality of elements belongs to a first group and the transducer further comprises a plurality of elements belonging to a second group different from the first group,
wherein first electrodes of the plurality of elements in the second group are electrically connected to each other by the bias wiring, and
wherein the first electrodes of the plurality of elements in the first group are not electrically connected to the first electrodes of the plurality of elements in the second group.

11. The transducer according to any one of claims 1 to 10, wherein the center frequency of the transducer is 1 MHz or more and 10 MHz or less.

12. A subject information acquisition apparatus comprising:
a transducer according to any one of claims 1 to 11 and a processing unit,
wherein the transducer receives an acoustic wave from a subject, and converts the received acoustic wave into an electrical signal, and
wherein the processing unit acquires information about the subject by using the electrical signal.
